# EUROPEAN PATENT SPECIFICATION

(11) **EP 1 533 575 B1**
(45) Date of publication and mention of the grant of the patent: **29.10.2008**
(21) Application number: 04022152.5
(22) Date of filing: 17.09.2004
(51) Int. Cl.: F24D 3/10, F24D 19/10, F24D 19/08

(54) **Manifold structure**
Heizkreisverteiler
Collecteur

(30) Priority: 24.11.2003 IT MI20030546
(43) Date of publication of application: 25.05.2005
(73) Proprietor: Caleffi S.p.A., 28010 Fontaneto d'Agogna, Novara (IT)
(72) Inventor: Caleffi, Marco, 28021 Borgomanero Novara (IT)
(74) Representative: Coloberti, Luigi

(56) References cited:
- WO-A-03/004924
- DE-U1- 8 903 159
- US-A- 4 679 729
- US-A- 5 868 439

## Description

### BACKGROUND OF THE INVENTION

This invention refers to manifolds for the distribution of a thermal fluid in heating systems, and in particular relates to a manifold unit suitable for panel type heating systems.

### STATE OF THE ART

A typical panel heating system is substantially composed of pipes laid under the floor level, variably disposed along the areas of the environments to be heated, forming one or more sets of concentric spiral arrangements having a different development in length, according to thermal calculation criteria and requirements.

After laying, the pipes are connected to main delivery and return pipings of the heating system, by means of distribution manifolds housed in an appropriate cabinet or box.

A manifold usually comprises a tubular body provided with a plurality of side connectors or pipe fittings for connection to the pipes of the various heating panels, and respectively for fitting regulation and control devices for regulating and controlling the flow and temperature of the flowing thermal fluid.

Several advantages are offered by panel type heating systems among which mention can be made of a high degree of thermal comfort, the possibility of using a thermal fluid at low temperatures, as well as other advantages from hygienic and aesthetical standpoint of view and the elimination of any external encumbrance typical for the conventional heating elements.

Moreover, panel type heating systems allow a certain reduction in operating costs; however, at the design stage it is extremely difficult, if not impossible to establish a priori the overall costs for a panel type heating system.

During the construction of a panel or mixed type of heating system, it should be also borne in mind that the delivery and return manifolds, with the respective hydraulic and control apparatuses, are housed in an opposite box disposed in a recess normally made in a brick-built partition wall separating the environments to be heated.

Partition walls in general are of extremely limited thickness, in the region of 8-10 cm; consequently, the housing must be of equal or of a reduced thickness so as not to create external encumbrances.

It is essential therefore to have manifolds, which take up as little space as possible, so as to be easily housed inside a housing box, and at the same time offering plant engineering type advantages, both in terms of control of the temperatures and in terms of easy installation and connection to the pipes for circulation of the thermal fluid.

In the construction of heating systems, in general, use is made of metal manifolds obtained by high-pressure die-casting brass, or starting from steel pipes, with comparatively high costs.

It has also been suggested to make manifolds in plastic material in order to reduce their costs.

However, the metal or plastic manifolds proposed until now do not adequately solve the problems of plant engineering and reduction of the space, nor of reduction of costs.

The preamble of claim 1 is known from US-A-5 868 439.

In particular, in order to control the temperature of the thermal fluid in the delivery and return manifolds, use is currently made of dial type bulb thermometers, which in addition to constituting a considerable external encumbrance, do not allow an easy reading of the temperature.

Moreover, each manifold must be provided with a suitable valve for venting the air, which, in the presently known solutions constitutes a further element of encumbrance and complexity for the entire manifold.

### SCOPES OF THE INVENTION

The main scope of this invention is to provide a simplified manifold assembly, which, in addition to offering a substantial reduction in costs, and simplifying the problems of installing and connecting the piping, also has considerably smaller overall dimensions compared to the manifolds conventionally in use.

A further scope is to provide a manifold assembly, as referred to above, which is also capable of allowing easy and immediate reading of the temperature of the thermal fluid flowing into the manifold.

### BRIEF DESCRIPTION OF THE INVENTION

The foregoing can be achieved by means of a manifold assembly according to the characterising portion of claim 1.

In particular, according to the invention, a manifold assembly has been provided comprising at least one manifold unit having of a tubular body of moulded plastic material, said modular unit being provided with one or more pipe fittings for connection to corresponding pipes for circulation of a thermal fluid in a heating system, and a corresponding number of connectors for flow rate meters and/or flow regulating valves, characterised in that the tubular body of the manifold unit is provided, on at least one outer side, with a flat exchanging heat surface, for exchange heat with the fluid flowing within the manifold body, said heat exchanging surface longitudinally extending to the manifold body; and heat sensing means provided with a thermal scale for indicating the temperature of the thermal fluid, said heat sensing means being in the form of a flat thermometrical strip adhered to said flat heat exchanging surface.

Several modular elements of the manifold can be connected in series, by simply screwing onto one another; therefore, according to a further feature of the invention, in order to prevent one modular element from partially unscrewing and becoming misaligned, use has been made of a C-shaped anti-unscrewing clip to be fitted into a corresponding seating provided between the adjoining ends of two adjacent modular elements of the manifold.

A still further characteristic of the manifold assembly as previously referred to, consists in the combination of a manifold unit with a sump-shaped element conformed for receiving an air relief valve, which may be screwed at one end of the same manifold.

Considering that a partition wall in which a housing box must be fitted has a maximum thickness of 100 mm, by means of a manifold according to this invention, it has been possible to limit the maximum depth of the manifold to approximately 75 mm, enabling it to be housed in having a depth of 80 mm, and therefore more suitable for partition walls of limited thickness.

The use of a flat thermometrical strip of the liquid crystal type, for controlling the temperature of the thermal fluid in the manifold, also offers better visibility due to the larger-sized numbering of the thermometrical scale, with the possibility of rendering such numbering phosphorescent.

The use of a liquid crystal thermometrical strip, in place of the normal dial thermometer, in addition to contributing towards reducing the overall dimensions of the manifold, and improving visibility, is relevant in that the manifolds are normally installed in dark areas, in recesses or in small poorly lit environments.

The precision in reading a liquid crystal thermometrical strip, compared to a dial thermometer, also constitutes a further advantage, in that a conventional thermometer is normally very small in size with indexing signs very close to one another.

Lastly, the use of an adhesive type liquid crystal thermometrical strip allows it to be applied more quickly; the perfectly smooth nature of the heat exchanging surface, obtainable by moulding the manifold in plastic material, enables perfect attachment, and consequently a greater reliability of the thermal contact over an extensive area of the manifold.

In the final analysis, the ample contact area between the thermometrical strip and the surface of the manifold, together with the very long times required for variation of the temperature, guarantee a faithful reading of the temperatures of the thermal fluid in the manifold.

### BRIEF DESCRIPTION OF THE DRAWINGS

These and further characteristics of the structure of the manifold assembly according to this invention, will be more clearly evident from the following description with reference to the accompanying drawings, in which:
Fig. 1 shows a view of the manifold assembly according to this invention, comprising two modular units;
Fig. 2 shows an enlarged detail;
Fig. 3 shows an enlarged detail in perspective view of the portions of two modules, designed to show the anti-unscrewing clip;
Fig. 4 shows an enlarged cross-sectional view of the sump-shaped terminal element for a float type air relief valve.

### DETAILED DESCRIPTION OF THE INVENTION

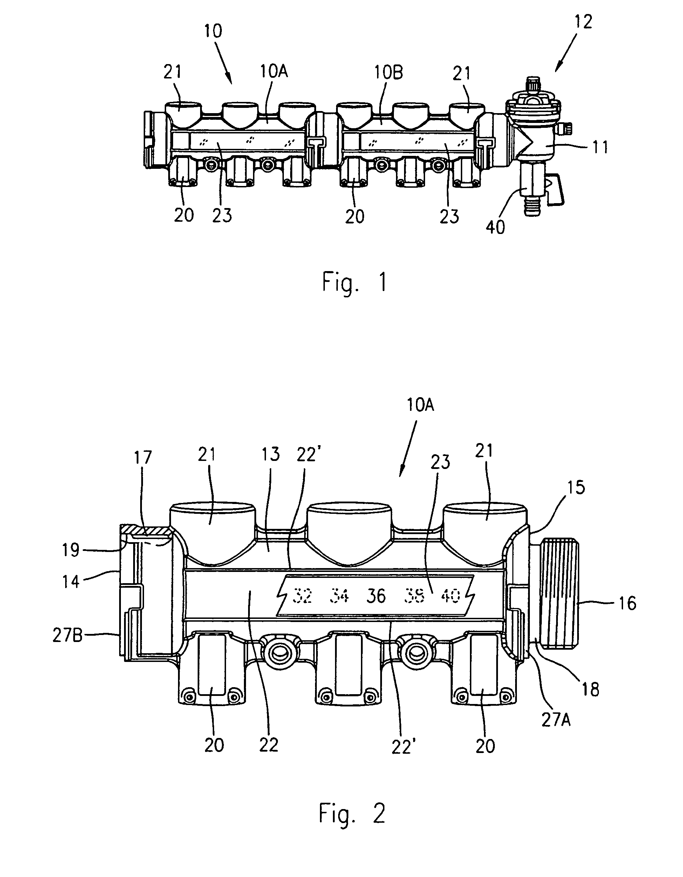

In Fig. 1, the reference number 10 has been used to indicate the manifold assembly composed, in the example shown, of a first manifold unit 10A, a second manifold unit 10B and a sump shaped element 11 for housing an air relief valve 12, as explained further on.

Fig. 2 shows an enlarged view of one of the two manifold units, in particular the manifold unit 10A.

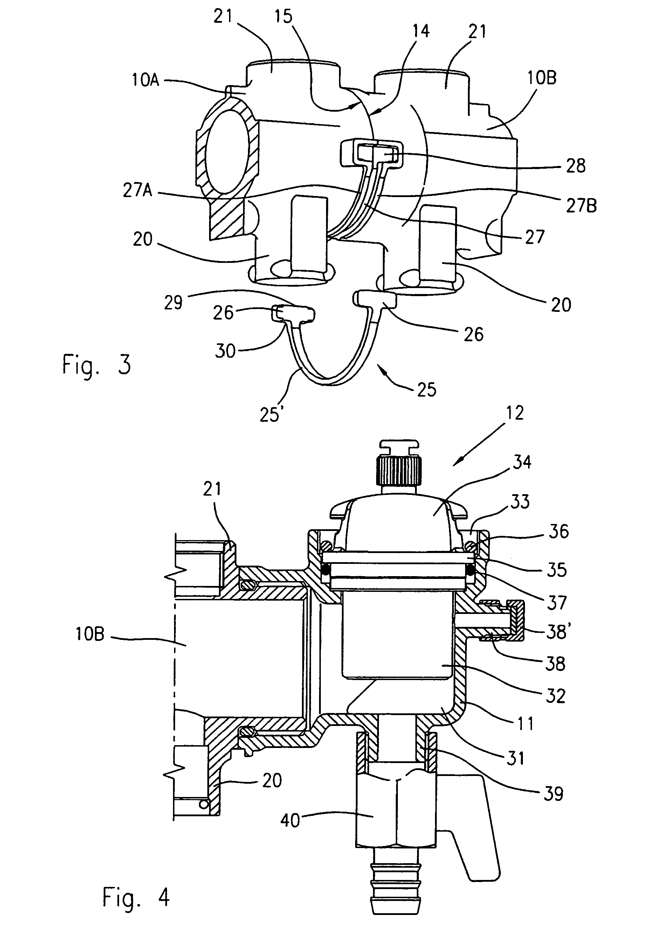

As shown in this figure, the manifold unit 10A comprises a tubular body 13 provided at both ends with a flat bearing edges 14 and 15 for contact between adjacent unit 10A, 10B, as shown in greater detail in Fig. 3.

A threaded connecting portion 16 axially extends from the end 15 of the manifold body 13; the threaded portion 16 is designed to be screwed into a socket 17 provided at the opposite end of an adjacent manifold unit.

The end threaded portion 16, in correspondence with the contacting edge 15, is provided with a groove 18 for an annular gasket, not shown, designed to form a seal against an internal surface 19 of the screwing socket 17 of an adjacent unit.

The manifold unit or module of Fig. 2 is also provided with a plurality of pipe fittings 20, three in the case shown, for connection with a corresponding number of pipes for circulation of the fluid towards individual panel heating areas of a heating system, or alternatively towards conventional heating elements.

Furthermore, in a position axially aligned with each branched pipe fitting 20, the body 13 of the manifold unit 10A is provided with a corresponding number of connectors 21 for screwing on flow regulating valves and/or flow rate meters devices, not shown.

As mentioned previously, each modular unit 10A, 10B of the manifold 10 is obtained by injection moulding of plastic material, using for example normal technopolymers, if necessary with fillers, such as reticulated polyethylene capable of withstanding to hydrolysis phenomena, and consequently suitable for the circulation of hot water or thermal fluids, without deteriorating over time.

According to a first feature of this invention manufacturing the body 13 of the manifold unit by moulding plastic material, makes it possible to form, on one or both sides of the body itself, a flat heat exchanging surface 22 which substantially extends along the entire length of the tubular body, characterised by a perfectly smooth matching surface, capable of allowing heat exchange between the fluid flowing within the manifold and a thermometrical strip 23.

In fact, due to the smooth nature of the extensive surface 22 for heat exchange with the fluid in the manifold, it is possible to apply a thermometrical strip 23 of liquid crystal type, with the previously mentioned advantages.

Although liquid crystal thermometrical strips are per se known, their use in manifolds has never been suggested for the scopes of this invention.

The thermometrical strip 23 preferably may be of the self-adhesive type, and is applied in a recessed seating between protective longitudinal ribs 22'.

A further feature, which, in addition to the use of a liquid crystal thermometrical strip, contributes towards improving the efficacy and ease of application and use of a manifold of this kind, is shown in the enlarged detail of Fig. 3.

Fig. 3 shows a perspective view of the opposite ends of two adjacent manifold units 10A and 10B, with their respective edge surfaces 14 and 15 in contact with each other.

Since the two manifold units 10A and 10B are connected by screwing, in order to ensure a correctly aligned assembly of several units of the manifold, it is necessary to maintain their condition of perfect alignment; this can be achieved by providing appropriate anti-unscrewing means. However, since the manifold is secured to the inside of an housing box, in a narrow space where it is difficult to work for an operator, according to a further feature of this invention use has been made of a special elastically yielding anti-unscrewing clip 25, capable of being applied and engaged by snapping into a shaped seating.

The clip 25 is substantially comprises a C-shaped arched shank 25', having a cross head 26 at each end which extends in a transversal direction to the shank of the anti-unscrewing element.

The anti-unscrewing clip 25 is designed to be fitted, from below of the manifold, into a corresponding seat provided by two halves 27A and 27B obtained, also by moulding, at the two ends of the bodies of the two adjusting manifold units 10A and 10B.

The heads 26 of the anti-unscrewing clip 25 can be of any appropriate shape; they are preferably delimited by flat lateral surfaces 29 and 30 conforming to corresponding flat surfaces inside the seat 28, parallely arranged to the longitudinal axis of the manifold body 10 so as to maintain the two manifold units 10A, 10B in a required aligned condition. The seats 28 at their ends, are preferably provided with undercut surfaces to enable an engagement, simply press fitting, with the heads 26.

Lastly, fig. 4 of the drawings shows a sump-shaped element for an air venting valve, suitable to be used in combination with a manifold assembly according to this invention.

As mentioned previously, one extremity of the manifold is fitted with a sump-shaped element 11 provided with a float type air venting valve 12.

According to this invention, the sump-shaped element 11 and the float valve 12 are shaped and arranged in such a way as to contribute towards reducing the overall dimensions of the manifold.

In this connection, the sump-shaped element 11 has a bottom chamber 31 in communication with the main duct of the manifold 10B, into which the float 32 of a float actuated valve 34 penetrates; the sump element 11 also comprises an open top cavity 33 for housing the valve 34.

The valve 34 is retained in the cavity 33 by means of a fork-shaped clip 36, the two legs of which pass through corresponding aligned holes in the upper peripheral edge of the sump-shaped element 11, engaging with an annular flange 35 of the valve body, as shown. An annular gasket 37 disposed between internal surfaces of the cavity 33 of the sump-shaped element and of the valve 34, provides the necessary seal.

The chamber 31 of the sump-shaped element can be provided with a venting hole 38, normally closed by a plug 38' for venting the air from the entire heating system, during filling with the thermal fluid. A connector 39 can be provided at the bottom of the chamber 31, for fitting a drain cock 40, for example of the ball-type.

From what has been described and shown in the accompanying drawings, it will be clear that what is provided is a manifold structure capable of achieving the aforementioned scopes; it is understood however that what has been described and shown with reference to the accompanying drawings has been given purely by way of example, and that other modifications or variations may be made to the manifold, the anti-unscrewing clip and the sump-shaped element for the air venting valve, without thereby departing from the scope of the claims.

## Claims

1. A manifold assembly comprising at least one manifold unit (10) having of a tubular body (13) of moulded plastic material, said modular unit (10) being provided with one or more pipe fittings (20) for connection to corresponding pipes for circulation of a thermal fluid in a heating system, and a corresponding number of connectors (21) for flow rate meters and/or flow regulating valves, the tubular body (13) of the manifold unit (10) being provided, on at least one outer side, with a flat heat exchanging surface (22), for heat exchange with the fluid flowing within the manifold body (12), said heat exchanging surface (22) longitudinally extending to the manifold body (13), **characterised in that** heat sensing means (23) are provided with a thermal scale for indicating the temperature of the thermal fluid, said heat sensing means (23) being in the form of a flat thermometrical strip adhered to said flat heat exchanging surface (22).

2. A manifold assembly according to claim 1, **characterised in that** the flat heat exchanging surface (22) is provided in a recessed seat.

3. A manifold assembly according to claim 2, **characterised in that** said recessed seat for the flat heat exchanging surface (22), is provided by peripheral ribs (22').

4. A manifold assembly according to claim 1, **characterised in that** the thermometrical strip (23) comprises a numeric scale of liquid crystal type.

5. A manifold assembly according to claim 1, comprising at least first and second modular manifold units (10A, 10B) screwably engageable in an axially aligned condition, **characterised by** comprising clamping means (25, 27) for retaining the manifold units (10A, 10B) in said aligned condition, said clamping means being in the form of a C-shaped clip (25) engaged in a corresponding C-shaped seat (27, 28) provided on confronting side ends of the manifold units (10A, 10B) of the assembly.

6. A manifold assembly according to claim 5 **characterised in that** the C-shaped clip (25) comprises an elastically flexible intermediate arch-shaped arm (25'), and a cross head (26) at each end of said arch-shaped arm (25').

7. A manifold assembly according to claim 6 **characterised in that** the cross heads (26) of the C-shaped clip (25) and corresponding seat (28) are conformed to engage by press-fitting.

8. A manifold assembly according to claim 7 **characterised in that** said cross-heads (26) and corresponding seats (28) are provided with complementary side surfaces (29, 30).

9. A manifold assembly according to claim 8, **characterised in that** said side surfaces (29, 30) of the cross-heads (26) and seats (28) are parallely arranged to the longitudinal axis of the manifold body (10).

10. A manifold assembly according to claim 1, **characterised by** comprising a sump-shaped element (11) for housing an air venting valve (12).

11. A manifold assembly according to claim 10, **characterised in that** the sump-shaped element (11) comprises a bottom chamber (31), and an open top cavity (33) for housing the air-venting valve (12).

12. A manifold assembly according to claim 12, **characterised in that** said air-venting valve (12) is of float-actuated type.

13. A manifold assembly according to claim 11, **characterised by** comprising, an air dischanging hole (38), closed by a removable plug (38') on a side of the chamber (31) for the air venting valve (12).

14. A manifold assembly according to claim 11, **characterised by** comprising, a connector (39) for a ball cock valve (40) at the bottom of the chamber (11) for the air-venting valve (12).

## Patentansprüche

1. Verteilerbaueinheit, umfassend zumindest eine Verteilereinheit (10), welche einen rohrförmigen Körper (13) aus geformten Kunststoff, wobei die besagte Verteilereinheit (10) mit einem oder mehreren Anschlussstücken (20) zum Verbinden mit korrespondierenden Rohren zur Zirkulation einer thermalen Flüssigkeit in einem Heizsystem ausgestattet ist, und eine entsprechende Zahl an Anschlussstutzen (21) für Durchflussmessgeräte und/oder Durchflussregelventile aufweist, wobei der rohrförmige Körper (13) der Verteilereinheit (10), zumindest auf einer Außenseite, mit einer flachen Wärmeaustauschfläche (22) zum Wärmeaustausch mit der Flüssigkeit, welche innerhalb des Verteilerkörpers (12) fließt, ausgestattet ist, wobei sich die besagte Wärmeaustauschfläche (22) der Länge nach zu dem Verteilerkörper (13) erstreckt,
**dadurch gekennzeichnet, dass** die Wärmeabtastmittel (23) mit einer Wärmeanzeige zum Anzeigen der Temperatur der thermalen Flüssigkeit versehen sind, wobei die besagten Wärmeabtastmittel (23) in Form eines flachen thermometrischen Streifens vorliegen, welcher an der besagten Wärmeaustauschfläche (22) angeklebt ist.

2. Verteilerbaueinheit nach Anspruch 1,
**dadurch gekennzeichnet, dass** die flache Wärmeaustauschfläche (22) sich in einem vertieften Sitz befindet.

3. Verteilerbaueinheit nach Anspruch 2,
**dadurch gekennzeichnet, dass** der besagte vertiefte Sitz für die flache Wärmeaustauschfläche (22) durch periphere Rippen (22') gebildet ist.

4. Verteilerbaueinheit nach Anspruch 1,
**dadurch gekennzeichnet, dass** der thermometrische Streifen (23) eine numerische Anzeige eines Flüssigkristalltyps umfasst.

5. Verteilerbaueinheit nach Anspruch 1, umfassend zumindest eine erste und zweite Verteilereinheit (10A, 10B), welche schraubar in einer axial ausgerichteten Lage befestigtbar sind, **gekennzeichnet durch** Umfassen von Klemmmitteln (25, 27) zum Halten der Verteilereinheiten (10A, 10B) in der besagten ausgerichteten Lage, wobei die Klemmmittel in Form eines C-förmigen Clips (25) vorliegen, der in einem korrespondierenden C-förmigen Sitz (27, 28) befestigt ist, welcher auf gegenüberliegenden Seitenenden der Verteilereinheiten (10A, 10B) der Baueinheit zur Verfügung gestellt ist.

6. Verteilerbaueinheit nach Anspruch 5,
**dadurch gekennzeichnet, dass** der C-förmige Clip (25) eine elastisch flexiblen, dazwischenliegenden, bogenförmigen Arm (25') und einen Querkopf (26) an jedem Ende des besagten bogenförmigen Arms (25') umfasst.

7. Verteilerbaueinheit nach Anspruch 6,
**dadurch gekennzeichnet, dass** die Querköpfe (26) des C-förmigen Clips (25) und der korrespondierende Sitz (28) übereinstimmen, um unter Presssitz einzuklinken.

8. Verteilerbaueinheit nach Anspruch 7,
**dadurch gekennzeichnet, dass** die besagten Querköpfe (26) und korrespondierenden Sitze (28) mit abgestimmten Seitenoberflächen (29, 30) versehen sind.

9. Verteilerbaueinheit nach Anspruch 8,
**dadurch gekennzeichnet, dass** die besagten Seitenoberflächen (29, 30) der Querköpfe (26) und der Sitze (28) parallel zu der Längsachse des Verteilerkörpers (10) angeordnet sind.

10. Verteilerbaueinheit nach Anspruch 1,
**gekennzeichnet durch** umfassen eines wannenförmigen Elements (11) zur Aufnahme eines Entlüftungsventils (12).

11. Verteilerbaueinheit nach Anspruch 10,
**dadurch gekennzeichnet, dass** das wannenförmige Element (11) eine untere Kammer (31) und eine geöffnete, obere Ausnehmung (33) zur Aufnahme des Entlüftungsventils (12) umfasst.

12. Verteilerbaueinheit nach Anspruch 12,
**dadurch gekennzeichnet, dass** das besagte Entlüftungsventil (12) ein schwimmkörperaktivierter Typ ist.

13. Verteilerbaueinheit nach Anspruch 11,
**gekennzeichnet durch** umfassen einer Luftablassbohrung (38), welche **durch** einen entfernbaren Stopfen (38') verschlossen ist, auf einer Seite der Kammer (31) für das Entlüftungsventil (12).

14. Verteilerbaueinheit nach Anspruch 11,
**gekennzeichnet durch** umfassen eines Anschlusses (39) für ein Kugelhahnventil (40) am Boden der Kammer (11) für das Entlüftungsventil (12).

## Revendications

1. Ensemble collecteur comprenant au moins un dispositif de collecteur (10) ayant un corps tubulaire (13) en matière plastique moulée, ledit dispositif (10), modulaire, étant pourvu d'un ou de plusieurs raccords (20) de tuyauterie pour le raccordement à des tuyaux correspondants pour la circulation d'un fluide thermique dans un système de chauffage, et d'un nombre correspondant de connecteurs (21) pour des débitmètres et /ou des régulateurs de débit, le corps tubulaire (13) du dispositif de collecteur (10) étant muni, sur au moins une face extérieure, d'une surface plane (22) d'échange de chaleur, pour échanger de la chaleur avec le fluide circulant dans le corps (13) de collecteur, ladite surface (22) d'échange de chaleur s'étendant longitudinalement par rapport au corps (13) de collecteur, **caractérisé en ce qu'**un moyen de détection de chaleur (23) est pourvu de graduations pour indiquer la température du fluide thermique, ledit moyen de détection de chaleur (23) se présentant sous la forme d'une bande thermométrique plane collée sur ladite surface plane (22) d'échange de chaleur.

2. Ensemble collecteur selon la revendication 1, **caractérisé en ce que** la surface plane (22) d'échange de chaleur est réalisée dans un creux.

3. Ensemble collecteur selon la revendication 2, **caractérisé en ce que** ledit creux pour la surface plane (22) d'échange de chaleur est défini par des nervures périphériques (22').

4. Ensemble collecteur selon la revendication 1, **caractérisé en ce que** la bande thermométrique (23) comporte des graduations numériques du type à cristaux liquides.

5. Ensemble collecteur selon la revendication 1, comprenant au moins un premier et un deuxième systèmes de collecteurs modulaires (10A, 10B) pouvant se visser dans un état d'alignement axial, **caractérisé en ce qu'**il comprend des moyens de serrage (25, 27) pour retenir les systèmes de collecteurs (10A, 10B) dans ledit état d'alignement, lesdits moyens de serrage se présentant sous la forme d'une attache en C (25) engagée dans un logement en C correspondant (27, 28) présent à des extrémités latérales, en regard l'une de l'autre, des dispositifs de collecteurs (10A, 10B) de l'ensemble.

6. Ensemble collecteur selon la revendication 5, **caractérisé en ce que** l'attache en C (25) comporte un bras intermédiaire de formée arquée (25') à déformabilité élastique, et une tête transversale (26) à chaque extrémité dudit bras de forme arquée (25').

7. Ensemble collecteur selon la revendication 6, **caractérisé en ce que** les têtes transversales (26) de l'attache en C (25) et le logement correspondant (28) sont conçus pour s'assembler par emboîtement.

8. Ensemble collecteur selon la revendication 7, **caractérisé en ce que** lesdites têtes transversales (26) et les logements correspondants (28) sont pourvus de surfaces latérales complémentaires (29, 30).

9. Ensemble collecteur selon la revendication 8, **caractérisé en ce que** lesdites surfaces latérales (29, 30) des têtes transversales (26) et des logements (28) sont disposées parallèlement à l'axe longitudinal du corps (10) de collecteur.

10. Ensemble collecteur selon la revendication 1, **caractérisé en ce qu'**il comporte un élément en forme de carter (11) destiné à loger un clapet de mise à l'air libre (12).

11. Ensemble collecteur selon la revendication 10, **caractérisé en ce que** l'élément en forme de carter (11) comporte une chambre inférieure (31) et une cavité supérieure ouverte (33) destinée à loger le clapet de mise à l'air libre (12).

12. Ensemble collecteur selon la revendication 12, **caractérisé en ce que** ledit clapet de mise à l'air libre (12) est du type à actionnement par flotteur.

13. Ensemble collecteur selon la revendication 11, **caractérisé en ce qu'**il comporte un trou de refoulement d'air (38), fermé par un bouchon amovible (38') sur un côté de la chambre (31) pour le clapet de mise à l'air libre (12).

14. Ensemble collecteur selon la revendication 11, **caractérisé en ce qu'**il comporte un connecteur (39) pour un robinet à tournant sphérique (40) au fond de la chambre (11) pour le clapet de mise à l'air libre (12).
